# EUROPEAN PATENT SPECIFICATION

(11) **EP 1 211 858 B1**
(45) Date of publication and mention of the grant of the patent: **27.12.2006**
(21) Application number: 01127382.8
(22) Date of filing: 22.11.2001
(51) Int. Cl.: H04L 1/00

(54) **Rate matching parameter calculation method, wireless communications base station apparatus, and wireless communications system**
Verfahren zur Datenraten-Parameterberechnung, Basisstation für drahtlose Kommunikation, und drahtloses Kommunikationssystem
Procédé de calcul des paramètres de débit, station de base pour communication sans fil, et système de communication sans fil

(30) Priority: 30.11.2000 JP 2000364195
(43) Date of publication of application: 05.06.2002
(73) Proprietor: Matsushita Electric Industrial Co. Ltd., Kadoma-shi, Osaka-fu (JP)
(72) Inventor: Ishida, Atsuko, Chita-shi, Aichi-ken (JP)
(74) Representative: Lang, Johannes

(56) References cited:
- EP-A- 1 069 798
- EP-A- 1 139 598
- WO-A-99/65148
- FR-A- 2 792 788
- "3rd Generation Partnership Projekt; Technical Specification Group Radio Access Network; Multiplexing and channel coding (FDD) (Release 1999)" 3GPP TS 25.212 V3.4.0, September 2000 (2000-09), XP002343409
- INSOO SOHN ET AL: "Performance studies of rate matching for WCDMA mobile receiver" VEHICULAR TECHNOLOGY CONFERENCE, 2000. IEEE VTS FALL VTC 2000. 52ND SEPT. 24-28, 2000, PISCATAWAY, NJ, USA,IEEE, vol. 6, 24 September 2000 (2000-09-24), pages 2661-2665, XP010525071 ISBN: 0-7803-6507-0

## Description

### BACKGROUND OF THE INVENTION

### Field of the Invention

The present invention relates to rate matching parameter calculation methods, wireless communications base station apparatuses, and wireless communications systems. More specifically, the present invention relates to a rate matching parameter calculation method used for rate matching with flexible positions in a downlink (DL) in 3GPP-compliant W-CDMA, a wireless communications base station apparatus using the method, and a wireless communications system including the apparatus.

### Description of the Background Art

Details on the rate matching parameter calculation scheme used in rate matching with flexible positions (the number of bits after rate matching is variable in length) in a downlink (direction of data transmitted from a base station to a portable terminal) are described in "3rd Generation Partnership Project (3GPP) Technical Specification Group Radio Access Network; Multiplexing and channel coding (FDD) (3GPP TS 25.212)".

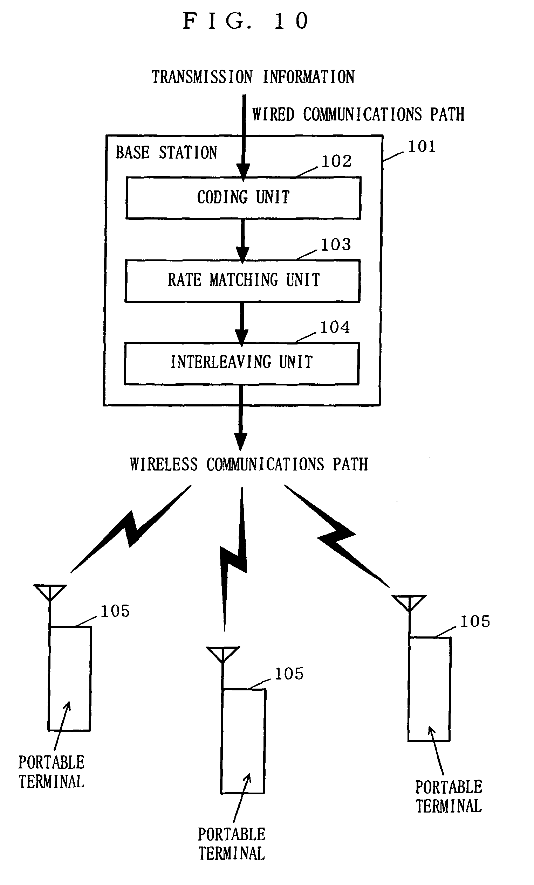

With reference to FIG. 10, described below are the specifications of this scheme.

A wireless communications base station 101 includes two external interfaces. One is a wired communications path for communications with a station (center station or control station) that outputs transmission information, and the other is a wireless communications path for wireless communications with portable terminals 105.

A coding unit 102 codes, by using a predetermined scheme, the transmission information supplied through the wired communications path, and sends out the coded transmission information to a rate matching unit 103.

The rate matching unit 103 matches a data transfer rate of the transmission information coded by the coding unit 102 transferred through the wired communications path and a data transfer rate of the transmission information transferred through the wireless communications path (rate matching).

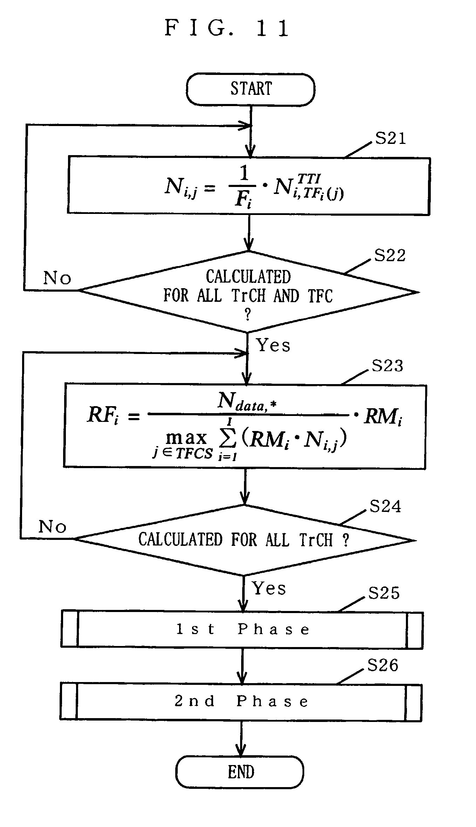

With reference to FIGS. 11 to 15, described in detail below is rate matching carried out by the rate matching unit 103.

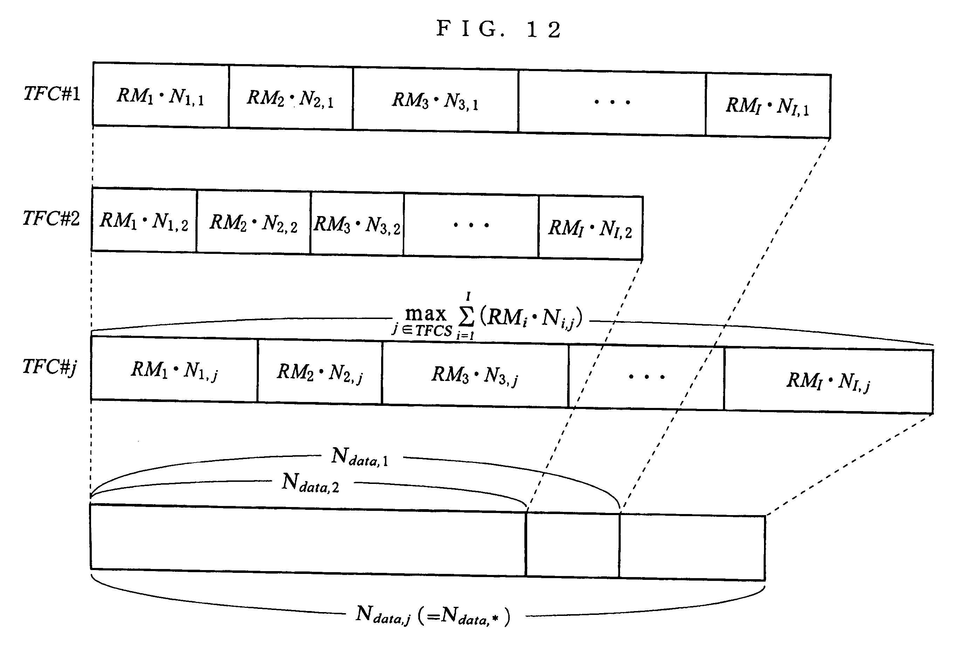

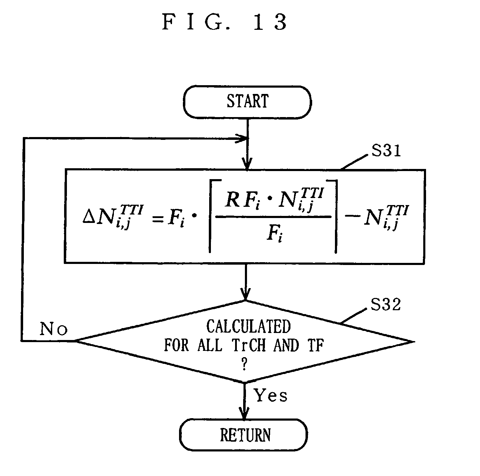

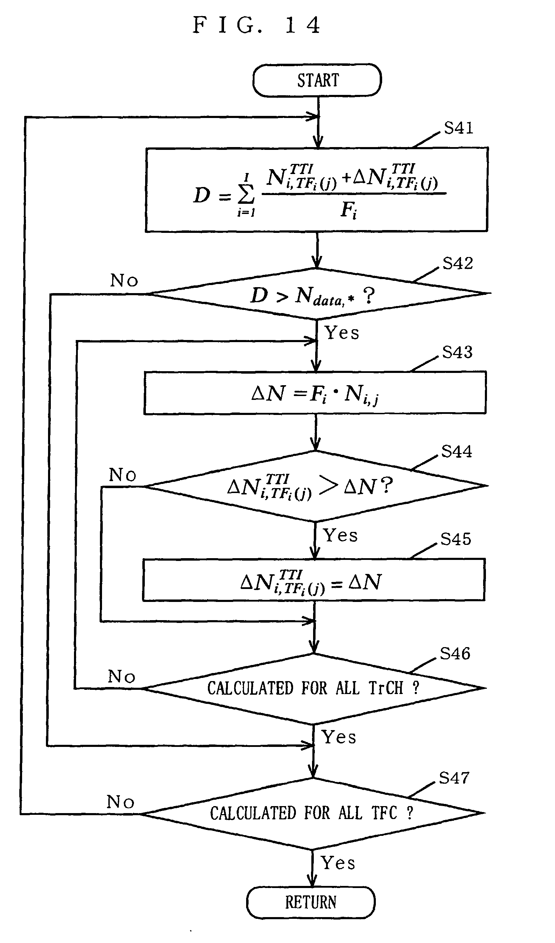

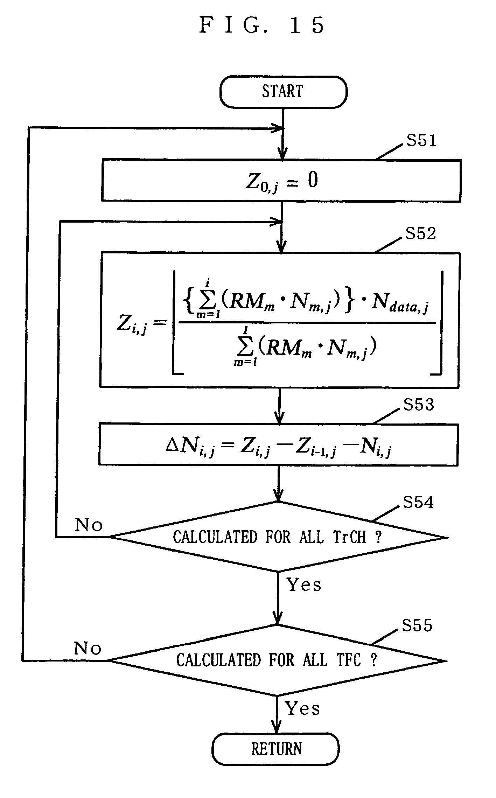

FIG. 11 is a flowchart showing a rate matching parameter calculation process standardized in 3GPP. FIG. 12 is a diagram showing how to calculate RFᵢ (how to correct RMᵢ) in the 3GPP specifications. Note that RMᵢ indicates a standard value of an i-th rate matching attribute, and RFᵢ indicates a corrected value obtained by correcting RMᵢ. FIG. 13 is a flowchart showing the 1st phase standardized in 3GPP. FIG. 14 is a flowchart showing the 2nd phase standardized in 3GPP. FIG. 15 is a flowchart showing how to calculate the number of repetition/puncture bits ΔN_{i,j} per radio frame in the 3GGP specifications.

The rate matching unit 103 creates J (J is a positive integer) combinations of Transport Channels (TrCHs) coded by the coding unit 102 according to Transport Formats (TF) indicating the construction of the respective TrCHs. Such combination is referred to as Transport Format Combination (TFC). Then, the rate matching unit 103 calculates, for all TFC#j (j = 1 to J), the number of rate matching input bits N_{i,TFi(j)}^{TTI} (i = 1 to I) in each Transmit Time Intervals (TTI) defined by a plurality of radio frames for all TrCH#1 to #I (I is a positive integer) in TFC#j. Note that the number of rate matching input bits is so represented herein as the above for convenience but, in fact, representations that appear in step S21 of FIG. 11 and step S31 of FIG. 13 are correct. The rate matching unit 103 then divides the number of bits N_{i.TF1(j)}^{TTI} by the number of radio frames Fᵢ included in each TTI to calculate the number of rate matching input bits N_{i,j} per radio frame (steps S21, S22).

The rate matching unit 103 then calculates a maximum value of the number of rate matching output bits maxΣ (RMᵢ · N_{i,j}), based on the number of rate matching input bits N_{i,j} calculated for all TrCH#i and a Rate Matching attribute (RM) specified by an upper application. The rate matching unit 103 then uses the maximum value to calculate the corrected value RFᵢ by correcting the standard value RMᵢ for every TrCH#i (steps S23, S24).

As shown in FIG. 12, the rate matching unit 103 executes the 1st phase (step S25) and the 2nd phase (step S26) to calculate the rate matching parameter for each TF by using the corrected value RFᵢ so that the number of rate matching output bits N_{data,j} does not exceed the number of wirelessly transmittable bits N_{data,*} for all TFC#j. The 1st and 2nd phases are described below.

In the 1st phase (step S25), as shown in FIG. 13, the rate matching unit 103 uses the calculated corrected value RFᵢ (step S23 of FIG. 11) to temporarily calculate the number of repetition/puncture bits ΔN_{i,l}^{TTI} in each TTI for all TF#1 (1 is a positive integer) of all TrCH#i (step S31, S32).

In the 2nd phase (step S26), the rate matching unit 103 determines whether each TFC#j exceeds the number of wirelessly transmittable bits N_{data,*} when the number of repetition/puncture bits ΔN_{i,l}^{TTI} in each TTI calculated in the above 1st phase is used for parameter calculation. If TFC#j exceeds N_{data,*}, the rate matching unit 103 recalculates (corrects) the number of repetition/puncture bits ΔN_{i,1}^{TTI}.

With reference to FIG. 14, the recalculation process is described in detail. From the number of rate matching input bits N_{i,TFi(j)}^{TTI} in each TTI calculated in step S21 of FIG. 11 and the number of repetition/puncture bits ΔN_{i,TFi(j)}^{TTI} in each TTI calculated in step S31 of FIG. 13, the rate matching unit 103 calculates the number of rate matching output bits D per radio frame for TFC#j (step S41). The rate matching unit 103 then determines whether the calculated number of rate matching output bits D exceeds the number of wirelessly transmittable bits N_{data,*} (step S42). If exceeds, the rate matching unit 103 multiplies the number of repetition/puncture bits ΔN_{i,j} per radio frame calculated with the 3GPP-standardized calculation scheme by the number of frames Fᵢ included in TTI to calculate the corrected number of repetition/puncture bits ΔN in each TTI (step S43).

With reference to FIG. 15, how to calculate the number of repetition/puncture bit ΔN_{i,j} per radio frame in step S43 is described in detail.

From the number of wirelessly transmittable bits N_{data,j} and the ratio of the rate of the number of rate matching output bits ΣRMₘ · N_{m, j} (m = 1 to i) for TrCH#1 to TrCH#i to the number of rate matching output bits ΣRMₘ · N_{m,j} (m = 1 to I) for TrCH#1 to TrCH#I, the number of rate matching output bits Z_{i,j} for TrCH#1 to TrCH#i for TFC#j (step S52). Note that, for TrCH#0, Z_{0,j} = 0 (step S51). The difference between the number of the rate matching output bits Z_{i,j} and the number of rate matching output bits Z_{i-1,j} for TrCH#1 to TrCH#(i-1) equals to the number of rate matching output bits for TrCH#i. Therefore, the difference between the number of rate matching output bits for TrCH#i and the number of rate matching input bits N_{i,j} for TrCH#i calculated in step S21 is the number of repetition/puncture bits ΔN_{i,j} for TrCH#i (step S53). Thereafter, the above steps S52 and S53 are repeatedly performed for all TrCH#i (step S54). Also, the above steps S51 to S54 are repeatedly performed for all TFC#j (step S55).

Referring back to FIG. 14, the rate matching unit 103 determines, by using the number of repetition/puncture bits ΔN_{i,j}, whether the corrected value ΔN for TrCH#i calculated in step S43 is smaller than the temporary value ΔN_{i,TFi(j)}^{TTI} calculated in step S31 of FIG. 13 (step S44). If the corrected value ΔN is smaller, the temporary value ΔN_{i,TFi(j)}^{TTI} is replaced by the corrected value ΔN (step S45). Thereafter, if the condition in step S42 is satisfied, the above steps S43 to S45 are repeatedly performed for every TrCH#i (step S46). Also, the above steps S41 to S46 are repeatedly performed for all TFC#j (step S47).

With reference to FIG. 10, the transmission information corrected by the rate matching unit 103 in data transfer rate between the wired and wireless communications paths is interleaved by the interleaving unit 104, and then outputted to the portable terminals 105 as radio data.

In the above conventional art, in the 2nd phase (step S26), the number of rate matching output bits D have to be calculated for all TFC#j (step S41), and compared with the number of wirelessly transmittable bits N_{data,*} (step S42) for determining whether correction is required or not. Therefore, the operations are always required as many as the number of TrCHs × the number of TFCs. Therefore, when various TFCs are specified in a service such as multicall, the process time is disadvantageously increased in proportion to the number of TFCs.

### SUMMARY OF THE INVENTION

Therefore, an object of the present invention is to provide a rate matching parameter calculation method capable of simply and quickly calculating the same results as those obtained in the 3GPP-standardized rate matching parameter calculation scheme, a wireless communications base station apparatus using the method, and a wireless communications system including the apparatus.

The present invention has the following features to attain the object above.

A first aspect of the present invention is directed to a method of calculating a rate matching parameter used for 3GPP-compliant rate matching according to claim 1.

A second aspect of the present invention is directed to a wireless communications base station apparatus according to claim 2.

A third aspect of the present invention is directed to a wireless communications system according to claim 3.

As described above, according to the first to third aspects, the number of bits to be repeated or punctured in rate matching can be calculated in a simple manner at high speed. Also, the load on a device, such as a CPU, during a setting process at the time of calling can be reduced. Such reduction advantageously enables the CPU to support other processing.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a flowchart showing a 2nd phase used for a rate matching parameter calculation method according to one embodiment of the present invention;
FIG. 2 is a diagram showing how the number of bits is changed after 3GPP-compliant rate matching;
FIG. 3 is a diagram showing example TrCH information;
FIG. 4 is a diagram showing example TFᵢ(j) and N_{i,j} values in each TFC;
FIG. 5 is a diagram showing example RFᵢ values;
FIG. 6 is a diagram showing example calculation results in the 1st phase;
FIG. 7 is a diagram showing example results after checking and updating ΔN_{i,j}^{TTI} where CTFC = 3;
FIG. 8 is a diagram showing example D values for each TFC;
FIG. 9 is a diagram showing example calculation results of ΔN for each TrCH;
FIG. 10 is a diagram showing one example structure of a W-CDMA communications system;
FIG. 11 is a flowchart showing a 3GPP-compliant rate matching parameter calculation process;
FIG. 12 is a diagram showing a 3GPP-compliant RFᵢ calculation scheme (RMᵢ correction scheme);
FIG. 13 is a flowchart showing the 3GPP-compliant 1st phase;
FIG. 14 is a flowchart showing the 3GPP-compliant 2nd phase; and
FIG. 15 is a flowchart showing a 3GPP-compliant ΔN_{i,j} calculation process.

### DESCRIPTION OF THE PREFERRED EMBODIMENTS

The present invention relates to a rate matching parameter calculation method carried out in a wireless communications base station (specifically, rate matching unit) included in such a wireless communications system as shown in FIG. 10, and is characterized by the 2nd phase (step S26) shown in FIG. 11. Except the 2nd phase, the rate matching parameter calculation method according to the present invention is similar to the conventional scheme shown in FIG. 11, and therefore not described in detail herein.

Described first is the general outlines of the rate matching parameter calculation method provided by the present invention. To solve the problem described above, the present invention has the following three features.

### (1) How to calculate the temporary value ΔN_{i,l}^{TTI} of the number of repetition/puncture bits in the 1st phase

In the conventional calculation scheme, in step S31 of FIG. 13, the temporary value ΔN_{i,l}^{TTI} is calculated by using the corrected value RFᵢ calculated in step S23 of FIG. 11. This temporary value ΔN_{i,l}^{TTI} has been rounded up to an integer to represent the number of bits. In other words, when the number of rate matching output bits D becomes maximum, the standard value RMᵢ is corrected so that the number of bits N_{data, j} becomes equal to the number of wirelessly transmittable bits N_{data,*}.

However, rounding up to an integer mathematically causes a deviation less than 1 bit per radio frame (10ms). Such deviation may cause the number of bits N_{data, j} to exceed the number of wirelessly transmittable bits N_{data,*,} but only for TFC whose number of rate matching output bits D is maximum. For the other TFC#j whose number of rate matching output bits D is not maximum, the number of bits N_{data,j} calculated by using the corrected value RFi becomes less than the number of wirelessly transmittable bits N_{data,*}. In other words, for the other TFC#j, the number of bits N_{data,j} does not exceed the number of wirelessly transmittable bits N_{data,*} even with the deviation due to rounding-up.

Therefore, in the present invention, the 2nd phase is performed only on TFC whose number of rate matching output bits D becomes maximum.

### (2) The relation between CTFC (Calculated Transport Format Combination) and TFI when the number of rate matching output bits D becomes maximum

The relation between CTFC and TFI is defined in "3rd Generation Partnership Project; Technical Specification Group Radio Access Network; RRC Protocol Specification (TS 25.331)". From the relation between CTFC and TFI, possible CTFC values are determined by the combination of TFIs for each TrCH.

Therefore, if there is any CTFC formed by combining respective maximum TFIs for each TrCH, the number of rate matching output bits D becomes maximum.

### (3) How to correct the number of repetition/puncture bits ΔN_{i,j}^{TTI} in the 2nd phase

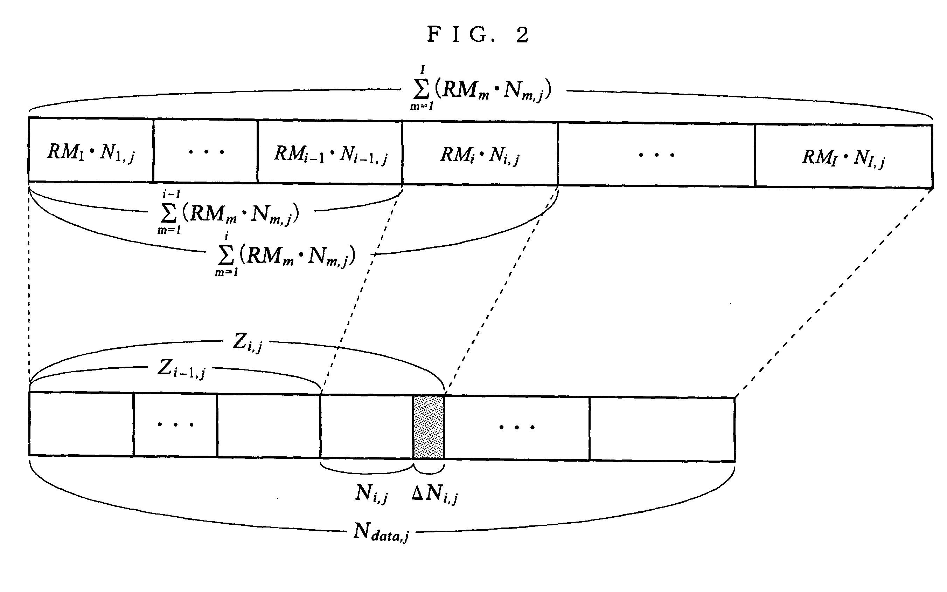

In the conventional 3GPP-standized calculation scheme, the number of repetition/puncture bits ΔN_{i,l} per radio frame is calculated as shown in FIG. 15, converted into the number of bits in each TTI, and updated only when the converted number of bits becomes smaller than the temporary value ΔN_{i,l}^{TTI} calculated in the 1st phase. In other words, the number of repetition/puncture bits ΔN_{i,l} is always calculated even when the update process does not have to be carried out. The number of repetition/puncture bits ΔN_{i,l} is calculated in the following manner. First, the number of bits of TrCH#i is obtained by calculating the difference between the number of bits from TrCH#1 to TrCH#i and the number of bits for TrCH#1 to TrCH#(i-1). Then, the difference between the number of bits for TrCH#i and the number of rate matching input bits N_{i,1} calculated in step S21 of FIG. 11 is taken as the number of repetition/puncture bits ΔN_{i,l}. How the number of bits is changed after rate matching is shown in FIG. 2.

In the present invention, the temporary value ΔN_{i, l} is updated only when the sum of the number of rate matching input bits N_{i,l} calculated in step S21 of FIG. 11 and the temporary value ΔN_{i,l} calculated in the 1st phase becomes larger than the number of bits for TrCH#i. The reason for this is as follows. The temporary value ΔN_{i,l} is updated so as not to exceed the number of wirelessly transmittable bits N_{data,*}. However, even if the temporary number of bits ΔN_{i,l}^{TTI} calculated in the 1st phase exceeds the number of wirelessly transmittable bits N_{data,*}, the exceeding amount is only less than 1 bit per radio frame. Therefore, in the present invention, only by subtracting 1 bit per radio frame from the temporary value ΔN_{i,1}^{TTI} calculated in the 1st phase, the number of bits N_{data,j} can be made within the number of wirelessly transmittable bits N_{data,*}. Thus, calculation of the number of repetition/puncture bits ΔN_{i,l} as shown in FIG. 15 is not required.

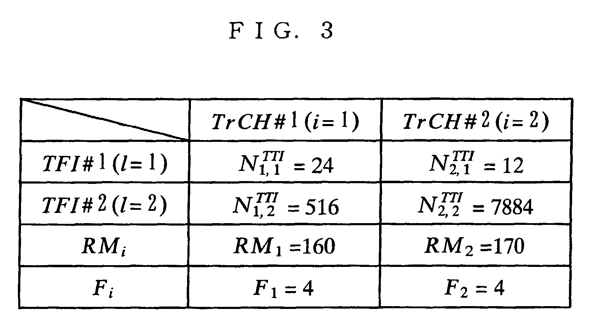

The rate matching parameter calculation method according to one embodiment of the present invention is described below with reference to the drawings. In the present embodiment, described is an example as shown in FIG. 3, assuming that transmission is carried out at unrestricted digital 64kbps, the number of TrCHs is 2 (TrCH#1, TrCH#2), and the number of TFIs for each TrCH is 2 (TFI#1, TFI#2), and all CTFCs are specified. Also assume that the number of wirelessly transmittable bits N_{data},* is 2100 bits per radio frame at maximum.

Information for each TrCH, and CTFC as TFCS information are supplied in advance from an upper application (not shown). In FIG. 3, based on the information supplied by the upper application, TF information for each TrCH is represented as the number of bits in each TTI after coding.

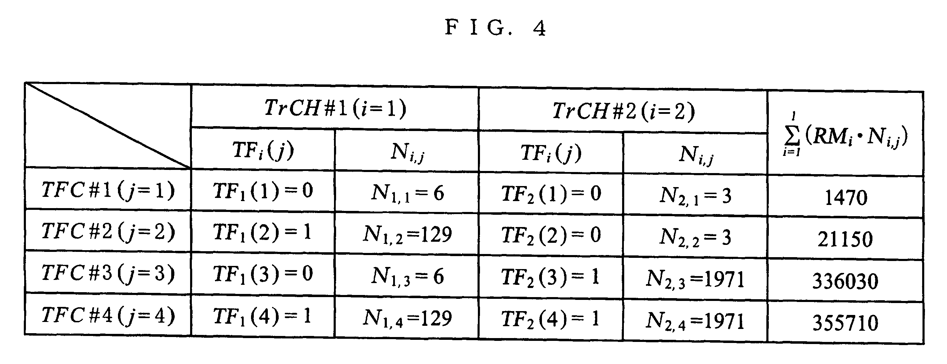

First, in the method according to the present invention, in step S21 of FIG. 11, the rate matching unit determines based on the each CTFC value which TFI of TrCH is used, and calculates the number of bits after coding. In the present example, such calculation results as shown in FIG. 4 are obtained. From the relation between CTFC and TFI, the number of TrCHs = 2 and the number of TFIs for each TrCH = 2. Therefore, four combinations of CTFCs (TFC#1 to TFC#4) are obtained.

Here, if CTFC = 4 is specified from the upper application, it is possible to know the number of rate matching output bits becomes maximum where CTFC = 4 without calculating the number of rate matching output bits for each CTFC.

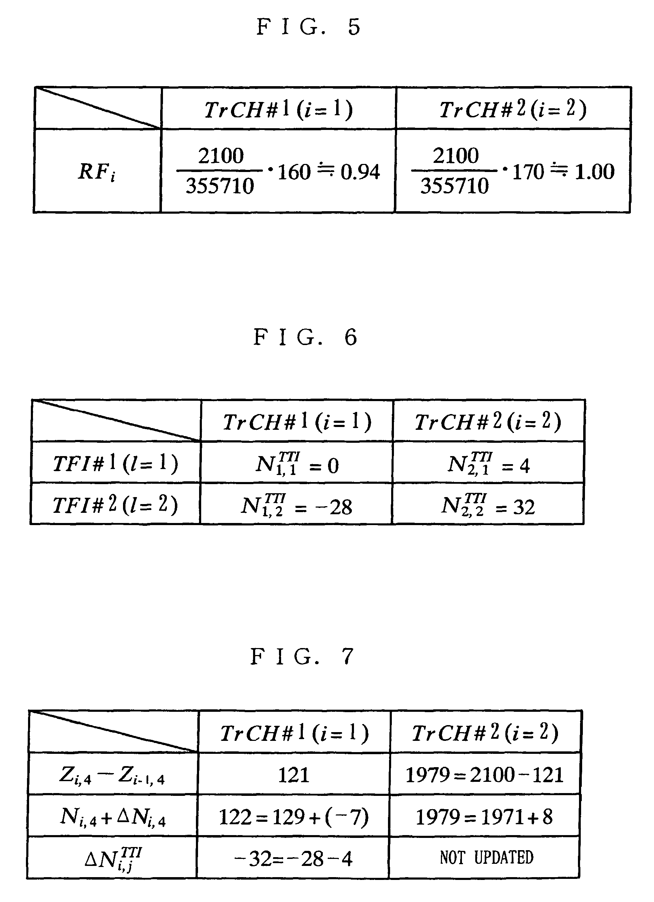

On the other hand, if CTFC is specified otherwise from the upper application, it is necessary to calculate the number of rate matching output bits for each CTFC, compare the results with each other, and store a maximum CTFC. Therefore, in the method according to the present invention, the corrected value RFᵢ for each TrCH#i is calculated in steps S23 and S24 of FIG. 11. The results are exemplarily shown in FIG. 5.

In the method according to the present invention, the 1st phase is performed using the corrected value RFᵢ, and the number of repetition/puncture bits ΔN_{i,1}^{TTI} in each TTI is temporarily calculated. The calculation results are exemplarily shown in FIG. 6.

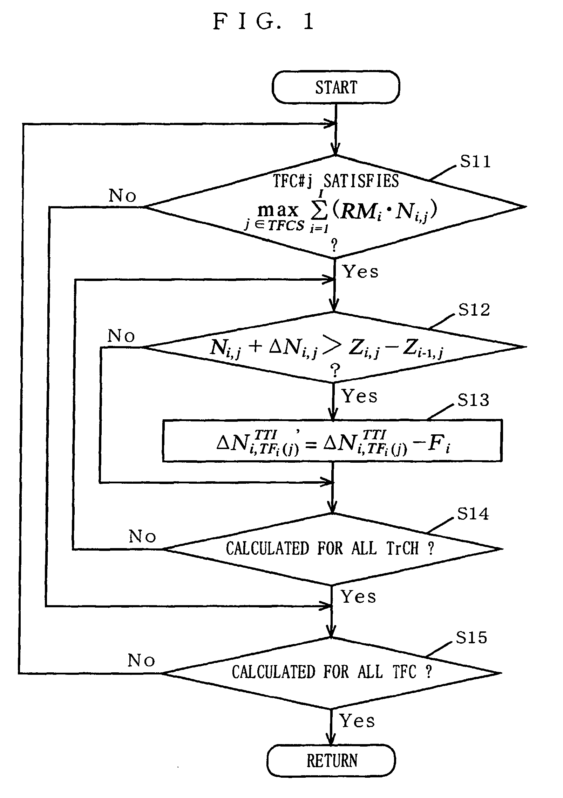

With reference to FIG. 1, described is the 2nd phase used for the rate matching parameter calculation method according to the present embodiment. FIG. 1 is a detailed flowchart corresponding to the 2nd phase (step 26) shown in FIG. 11.

First, it is determined whether TFC#j to be processed is TFC whose the number of rate matching output bits becomes maximum, and the 2nd phase is carried out only when such TFC becomes maximum (step S11). In the present example, the number of repetition/puncture bits AN is checked and updated in the 2nd phase for the CTFC = 4 when specified as such or, when CTFC is specified otherwise, for the maximum CTFC stored after calculation and comparison of the numbers of rate matching output bits for all CTFC (step S11, Yes).

Next, according to the 3GPP specifications shown in FIG. 15 (step S52), the number of rate matching output bits Z_{i,j} for TrCH#1 to TrCH#i and the number of rate matching output bits Z_{i-1,j} for TrCH#1 to TrCH#(i-1) are calculated. Then, in step S12, it is determined whether the sum of the number of rate matching input bits N_{i,j} calculated in step S21 of FIG. 11 and the number of repetition/puncture bits ΔN_{i,j} per radio frame calculated in the 1st phase exceeds the number of radio transmittable bits for TrCH#i (a difference in number of bits denoted in FIG. 2 as (Z_{i,j} - Z_{i-i,j})). If the answer is Yes, the number of repetition/puncture bits ΔN_{i,l}^{TTI} in each TTI is decreased by one bit per radio frame for correction (step S13). The correction results are exemplarily shown in FIG. 7.

Thereafter, the above steps S12 and S13 are repeatedly carried out for all TrCH#i (step S14). Also, the above steps S11 to S14 are repeatedly carried out for all TFC#j (step S15).

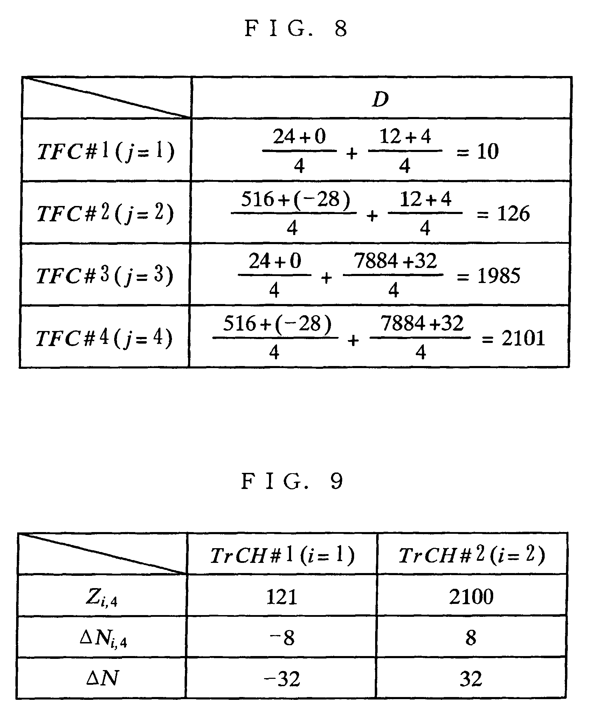

The calculation results in the 2nd phase specified in the 3GGP are shown in FIGS. 8 and 9. As can be seen from the above, when CTFC = 4 is specified, the number of repetition/puncture bits ΔN is recalculated, and the numbers of repetition/puncture bits ΔN_{i,1}^{TTI} in each TTI for TrCH#1 and TFCH#2 are updated after recalculation.

Therefore, the calculation method in the 2nd phase according to the present invention omits part of processing of the 3GPP-specified calculation scheme for simplification. The calculation results are, however, the same as those in the 3GPP-specified scheme.

As stated above, in the rate matching parameter calculation method according to the embodiment of the present invention, the number of bits to be repeated or punctured in rate matching can be calculated in a simple manner at high speed. Also, the load on a device, such as the CPU, in a setting process at the time of calling can be reduced. Such reduction advantageously enables the CPU to support other processing.

In the above embodiment, described is a case of unrestricted digital 64kbps. The calculation method according to the above embodiment can also be applied to audio, packet, and multicall in combination of services.

While the invention has been described in detail, the foregoing description is in all aspects illustrative and not restrictive. It is understood that numerous other modifications and variations can be devised without departing from the scope of the invention.

## Claims

1. A method of calculating a rate matching parameter used for 3GPP-compliant rate matching with flexible positions in a downlink, said method comprising:
a step of generating J transport format combinations TFCs of I transport channels TrCHs of transmission information, J and I being positive integers;
a step (S11) of obtaining, from among said J TFCs the jth TFC, TFC#j, whose total number of rate matching input bits calculated in each transmission time interval TTI for each of said TrCHs becomes maximum, j being any integer of 1 to J;
a step (S21, S31, S12) of calculating, for the ith TrCH, TrCH#i forming said TFC#j, a number of rate matching input bits N_{i,j} per radio frame and a temporary number of repetition/puncture bits ΔN_{i,j} per radio frame for obtaining a sum N_{i,j} + ΔN_{i,j} thereof, i being any integer of 1 to I;
a step (S52, S12) of calculating, for every TrCH#i forming the TFC#j, a number of rate matching output bits Z_{i,j} for TrCH#1 to TrCH#i and a number of rate matching output bits Z_{i-1,j} for TrCH#1 to TrCH#i-1 for obtaining a difference Z_{i,j} - Z_{i-1,j} therebetween;
a step (12) of comparing said sum with said difference; and
a step (S13) of changing, when said sum is larger than said difference, a number of repetition/puncture bits ΔN_{i,l}^{TTI} in each TTI calculated from said temporary number of repetition/puncture bits ΔN_{i,j} into a new number of repetition/puncture bits ΔN_{i,l}^{TTI,} in each TTI by subtracting a number of radio frames Fᵢ included in the TTI from the number of repetition/puncture bits ΔN_{i,l}^{TTI} in each TTI.

2. A wireless communications base station apparatus (101) for receiving data from a control station, adjusting a transfer rate of the data based on 3GPP-compliant rate matching with flexible positions in a downlink, and transmitting the adjusted data to a portable terminal (105), comprising:
means for generating J transport format combinations TFCs of I transport channels TrCHs of transmission information, J and I being positive integers,
means for calculating, from among said J TFCs the jth TFC, TFC#j, whose total number of rate matching input bits calculated in each transmission time interval TTI for each of said TrCHs becomes maximum (S 11), j being any integer of 1 to J,
means for calculating, for the ith TrCH, TrCH#i forming said TFC#j, a number of rate matching input bits N_{i,j} per radio frame and a temporary number of repetition/puncture bits per radio frame ΔN_{i,j} and obtaining a sum N_{i,j} + ΔN_{i,j} thereof (S21, S31, S12), i being any integer of 1 to I,
means for calculating, for every TrCH#i forming said TFC#j, a number of rate matching output bits Z_{i,j} for TrCH#1 to TrCH#i and a number of rate matching output bits Z_{i-1,j} for TrCH#1 to TrCH#i-1 and obtaining a difference Z_{i,j} - Z_{i-1,j} therebetween (S52, S12), and
means for comparing said sum with said difference (S12), and when said sum is larger than said difference, changing a number of repetition/puncture bits ΔN_{i,l}^{TTI} in each TTI calculated from said temporary number of repetition/puncture bits ΔN_{i,j} is changed into a new number of repetition/puncture bits ΔN_{i,l}^{TTI,} in each TTI by subtracting a number of radio frames Fᵢ included in the TTI from the number of repetition/puncture bits ΔN_{i,1}^{TTI} in each TTI (S 13).

3. A wireless communications system comprising:
a radio communications base station apparatus (101) according to claim 2;
a control station apparatus for transmitting/receiving data to/from said radio communications base station apparatus (101) at a specific data transfer rate; and
at least one portable terminal device (105) for transmitting/receiving data from/to said radio communications base station apparatus (101) at a data transfer rate different from said specific data transfer rate.

## Patentansprüche

1. Verfahren zum Berechnen eines Ratenanpassungsparameters, verwendet zum mit 3GPP übereinstimmendes Ratenanpassen mit flexiblen Positionen in einer Abwärtsverbindung, wobei das Verfahren umfasst:
einen Schritt des Erzeugens von J Transportformatkombinationen TFCs von I Transportkanälen TrCHs von Übertragungsinformation, wobei J und I positive ganze Zahlen sind;
einen Schritt (S11) des Erhaltens, aus den J TFCs, den j-ten TFC, TFC#j, dessen Gesamtanzahl von Ratenanpassung-Eingabebits, berechnet in jedem Übertragungszeitintervall TTI, für jeden der TRCs maximal wird, wobei j eine beliebige ganze Zahl zwischen 1 und J ist;
einen Schritt (S21, S31, S12) des Berechnens, für den i-ten TrCH, TrCH#i, welcher den TFC#j bildet, einer Anzahl von Ratenanpassung-Eingabebits N_{i,j} pro Funkrahmen und einer temporären Anzahl von Wiederholungs-/Punktierungsbits ΔN_{i,j} per Funkrahmen, um eine Summe N_{i,j} + ΔN_{i,j} davon zu erhalten, wobei i eine beliebige ganze Zahl zwischen 1 und I ist;
einen Schritt (S52, S12) zum Berechnen, für jeden TrCH#i, welcher den TFC#j bildet, einer Anzahl an Ratenanpassung-Ausgabebits Z_{i,j} für TrCH#1 bis TrCH#i und einer Anazahl von Ratenanpassung-Ausgabebits Z_{i-1,j} für TrCH#1 bis TrCH#i-1, um eine Differenz Z_{i,j} - Z_{i-l,j} dazwischen zu erhalten;
einen Schritt (12) zum Vergleichen der Summe mit der Differenz; und
einen Schritt (S13) zum Verändern, wenn die Summe größer als die Differenz ist, einer Anzahl von Wiederholungs-/Punktierungsbits ΔN_{i,l}^{TTI} in jedem TTI, berechnet von der temporären Anzahl von Wiederholungs-/Punktierungsbits ΔN_{i,j}^{TTI} in eine neue Anzahl von Wiederholungs-/Punktierungsbits ΔN_{i,1}^{TTI} in jedem TTI durch Subtrahieren einer Anzahl von Funkrahmen Fᵢ, die in dem TTI enthalten sind, von der Anzahl von Wiederholungs-/Punktierungsbits ΔN_{i,1}^{TTI} in jedem TTI.

2. Funkkommunikationsbasisstationsvorrichtung (101) zum Empfangen von Daten von einer Kontrollstation, Anpassen einer Transferrate der Daten basierend auf 3GPP übereinstimmendem Ratenanpassen mit flexiblen Positionen in einer Abwärtsverbindung, und Übertragen der angepassten Daten an ein tragbares Endgerät (105), umfassend:
Mittel zum Erzeugen von J Transportformatkombinationen TFCs von I Transportkanälen TrCHs von Übertragungsinformation, wobei J und I positive ganze Zahlen sind,
Mittel zum Berechnen, unter den J TFCs, des j-ten TFC, TFC#j, dessen Gesamtanzahl an Ratenanpassung-Eingabebits berechnet in jedem Übertragungszeitintervall TTI für jeden der TrCHs maximal wird (S11), wobei j eine beliebige Zahl zwischen 1 und j ist,
Mittel zum Berechnen, für den i-ten TrCH, TrCH#i, welcher den TFC#j bildet, einer Anzahl von Ratenanpassung-Eingabebits N_{i,j} pro Funkrahmen, und einer temporären Anzahl an Wiederholungs-/Punktierungsbits per Funkrahmen ΔN_{i,j} und Erhalten einer Summe N_{i,j} + ΔN_{i,j} davon (S21, S31, S 12), wobei i eine beliebige ganze Zahl zwischen 1 und 1 ist,
Mittel zum Berechnen, für jeden TrCH#i, welcher den TFC#j bildet, einer Anzahl an Ratenanpassung-Ausgabebits Z_{i,j} für TrCH#1 bis TrCH#i, und einer Anzahl ratenangepasster Ausgabebits Z_{i-1,j} für TrCH#1 bis TrCH#i1-1 und Erhalten einer Differenz Z_{i,j} - Z_{i-1,j} dazwischen (S52, S12), und
Mittel zum Vergleichen der Summe mit der Differenz (S12), und wenn die Summe größer als die Differenz ist, Verändern einer Anzahl von Wiederholungs-/Punktierungsbits ΔN_{i,l}^{TTI} in jedem TTI, berechnet von der temporären Anzahl von Wiederholungs-/Punktierungsbits ΔN_{i,j} in eine neue Anzahl von Wiederholungs-/Punktierungsbits ΔN_{i,1}^{TTI} in jedem TTI durch Subtrahieren einer Anzahl von Funkrahmen F;, enthalten in dem TTI, von der Anzahl von Wiederholungs-/Punktierungsbits ΔN_{i,1}^{TTI} in jedem TTI (S13).

3. Funkkommunikationssystem, aufweisend:
eine Funkkommunikationsbasisstationsvorrichtung (101) gemäß Anspruch 2;
eine Kontrollstationsvorrichtung zum Übertragen/Empfangen von Daten zu/von der Funkkommunikationsbasisstationsvorrichtung (101) bei einer spezifischen Datentransferrate; und
zumindest eine tragbare Endgerätevorrichtung (105) zum Senden/Empfangen von Daten von/zu der Funkkommunikationsbasisstationsvorrichtung (101) bei einer Datentransferrate, welche sich von der spezifischen Datentransferrate unterscheidet.

## Revendications

1. Procédé de calcul d'un paramètre d'adaptation de débit utilisé pour adaptation de débit conforme à 3GPP avec des positions flexibles dans une liaison descendante, ledit procédé comprenant:
une étape de génération de J combinaisons de formats de transport TFCs de I canaux de transport TrCHs d'information de transmission, J et I étant des nombres entiers positifs;
une étape (S11) d'obtention, à partir desdits J TFCs du jième TFC, TFC#j, dont le nombre total de bits d'entrée d'adaptation de débit calculé dans chaque intervalle de temps de transmission TTI pour chacun desdits TrCHs devient maximal, j étant un nombre entier quelconque de 1 à J;
une étape (S21, S31, S12) de calcul, pour le ième TrCH, TrCH#i formant ledit TFC#j, d'un nombre de bits d'entrée d'adaptation de débit N_{i,j} par trame radio et d'un nombre provisoire de bits de répétition/poinçonnage ΔN_{i,j} par trame radio pour obtenir une somme Nᵢⱼ + ΔN_{i,j} correspondante, i étant un nombre entier quelconque de 1 à I;
une étape (S52, S12) de calcul, pour chaque TrCH#i formant le TFC#j, d'un nombre de bits de sortie d'adaptation de débit Z_{i,j} pour TrCH#1 à TrCH#i et d'un nombre de bits de sortie d'adaptation de débit Z_{i-1,j} pour TrCH#1 à TrCH#i-1 pour obtenir une différence Z_{i,j} - Z_{i-l,j} entre eux;
une étape (S12) de comparaison de ladite somme à ladite différence; et
une étape (S13) de changement, lorsque ladite somme est supérieure à ladite différence, d'un nombre de bits de répétition/poinçonnage ΔN_{i,l}^{TTI} dans chaque TTI calculé à partir dudit nombre de bits de répétition/poinçonnage ΔN_{i,j} provisoire en un nouveau nombre de bits de répétition/poinçonnage ΔN_{i,l}^{TTI} dans chaque TTI en soustrayant un nombre de trames radio Fᵢ incluses dans le TTI du nombre de bits de répétition/poinçonnage ΔN_{i,l}^{TTI} dans chaque TTI.

2. Appareil de station de base pour communications sans fil (101) pour recevoir des données depuis une station de commande, ajuster un débit de transfert des données sur la base d'adaptation de débit conforme à 3GPP avec des positions flexibles dans une liaison descendante, et transmettre les données ajustés à un terminal portatif (105), comprenant:
un moyen pour générer J combinaisons de formats de transport TFCs de 1 canaux de transport TrCHs d'information de transmission, J et 1 étant des nombres entiers positifs,
un moyen pour calculer, à partir desdits J TFCs le jième TFC, TFC#j, dont le nombre total de bits d'entrée d'adaptation de débit calculé dans chaque intervalle de temps de transmission TTI pour chacun desdits TrCHs devient maximal (S11), j étant un nombre entier quelconque de 1 à J;
un moyen pour calculer, pour le ième TrCH, TrCH#i formant ledit TFC#j, un nombre de bits d'entrée d'adaptation de débit N_{i,j} par trame radio et un nombre provisoire de bits de répétition/poinçonnage par trame radio ΔN_{i,j} et obtenir une somme N_{i,j} + ΔN_{i,j} correspondante (S21, S31, S 12), i étant un nombre entier quelconque de 1 à I,
un moyen pour calculer, pour chaque TrCH#i formant ledit TFC#j, un nombre de bits de sortie d'adaptation de débit Z_{i,j} pour TrCH#1 à TrCH#i et un nombre de bits de sortie d'adaptation de débit Z_{i-1,j} pour TrCH#1 à TrCH#i-1 et obtenir une différence Z_{i,j} - Z_{i-l,j} entre eux (S52, S12), et
un moyen pour comparer ladite somme à ladite différence (S 12), et lorsque ladite somme est supérieure à ladite différence, changer un nombre de bits de répétition/poinçonnage ΔN_{i,l}^{TTI} dans chaque TTI calculé à partir dudit nombre provisoire de bits de répétition/poinçonnage ΔN_{i,j} en un nouveau nombre de bits de répétition/poinçonnage ΔN_{i,l}^{TTI} dans chaque TTI en soustrayant un nombre de trames radio Fᵢ incluses dans le TTI du nombre de bits de répétition/poinçonnage ΔN_{i,l}^{TTI} dans chaque TTI (S 13).

3. Système de communications sans fil comprenant:
un appareil de station de base pour communications radio (101) selon la revendication 2;
un appareil de station de commande pour transmettre/recevoir des données à/depuis ledit appareil de station de base pour communications radio (101) à un débit de transfert de données spécifique; et
au moins un dispositif terminal portatif (105) pour transmettre/recevoir des données depuis/vers ledit appareil de station de base pour communications radio (101) à un débit de transfert de données différent dudit débit de transfert de données spécifique.
